Europäisches Patentamt

European Patent Office

Office européen des brevets

(11) Publication number: **0 160 043 B1**

# EUROPEAN PATENT SPECIFICATION
## published in accordance with Art. 158(3) EPC

(45) Date of publication of patent specification: **31.07.91**   (51) Int. Cl.⁵: **B01D 19/00, C02F 1/58, C01C 1/10**

(21) Application number: **84903892.2**

(22) Date of filing: **15.10.84**

(86) International application number:
**PCT/NL84/00034**

(87) International publication number:
**WO 85/01671 (25.04.85 85/10)**

(54) A PROCESS FOR CONTINUOUSLY REMOVING AND RECOVERING AMMONIA FROM AQUEOUS AMMONIA WASTE WATER.

(30) Priority: **14.10.83 NL 8303524**
**27.02.84 NL 8400597**
**02.03.84 NL 8400686**

(43) Date of publication of application:
**06.11.85 Bulletin 85/45**

(45) Publication of the grant of the patent:
**31.07.91 Bulletin 91/31**

(84) Designated Contracting States:
**AT BE CH DE FR GB LI SE**

(56) References cited:
**EP-A- 0 029 536**
**EP-A- 0 103 674**
**DE-A- 2 738 633**
**GB-A- 1 416 920**
**US-A- 3 954 425**

(73) Proprietor: **DRESE, Jan Theo**
**1-9 De Bloemert**
**NL-9475 TG Midlaren(NL)**

(72) Inventor: **DRESE, Jan Theo**
**1-9 De Bloemert**
**NL-9475 TG Midlaren(NL)**

(74) Representative: **Smulders, Theodorus A.H.J., Ir. et al**
**Vereenigde Octrooibureaux Nieuwe Parklaan 107**
**NL-2587 BP 's-Gravenhage(NL)**

Rank Xerox (UK) Business Services

## Description

The invention relates to a process for continuously removing and recovering ammonia from aqueous ammonia waste water wherein the water is led through a stripper column in counter-current with a stripping gas and wherein the water to be stripped of ammonia is preheated in a heat exchanger device.

Such a process is known from GB-A-1,416,920. In the known process the water to be stripped from ammonia is preheated in a heat exchanger by the water which has already been stripped from ammonia and which is leaving the stripper column. The heat exchanger is a conventional heat exchanger in which the water to be stripped obviously stays separated from the already stripped water. A suitable heat exchanger therefore should have very large heat transfer surfaces and moreover should be made from stainless steel which is very expensive.

It is an object of the present invention to provide an improved process in which the water to be stripped is preheated in a more efficient and less expensive way.

According to the invention a process of the above indicated kind is characterized in that the water before being stripped of ammonia is brought in a first packed bed into direct contact with a warm gas stream which is saturated with steam and which transfers heat to the water in order to preheat the water;

the pH of the water to be stripped is increased to a value suitable for stripping of the ammonia after the water has left the first packed bed;

the water subsequently is stripped of ammonia; and

the gas stream, before being led to the first packed bed at least partly is brought in direct contact in at least one further packed bed with the water while and/or after the water is being stripped of ammonia.

It is a further object of the invention to provide an improved process which makes it possible to obtain the ammonia stripped from the water as an economical valuable product, e.g. a concentrated ammonia solution in water.

The invention will be further explained with reference to the drawings:

Fig. 1 is a flow diagram for the process of the invention;

Fig. 2 shows a stripper/absorber,appropriate for the production of a concentrated solution of the gas to be stripped in the liquid and

Fig. 3 shows the flow diagram for changing the concentration of the ammonia to be stripped.

The usual process of stripping ammonia from waste water is supposed to be known.

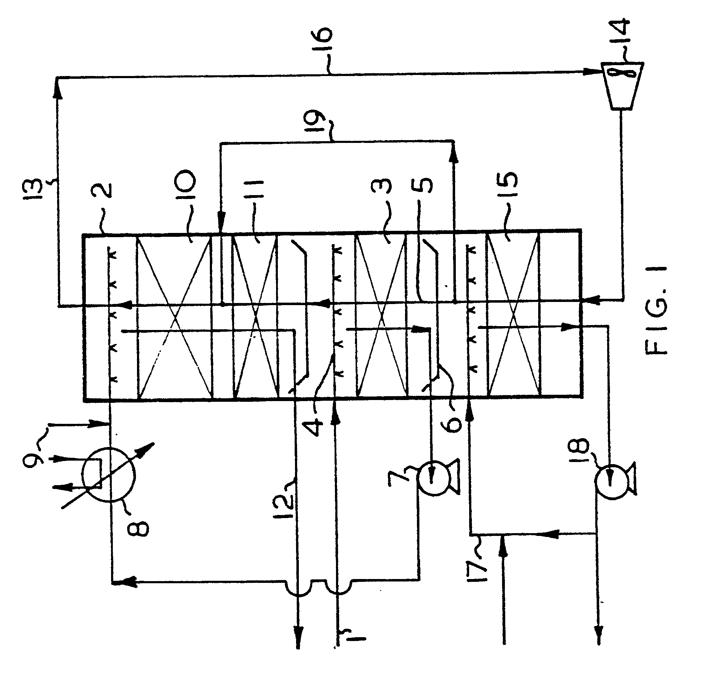

According to the invention, as shown in Fig. 1, waste water containing ammonia is supplied through conduct 1 to a packed bed 3 provided in column 2. The water is distributed by means of sprayers 4 and is brought in contact with an air flow 5 which is carried in counter current through the bed 3. The water to be stripped has a temperature of 30° C, the influent air flow 5 is of a temperature of 62.2° C and is saturated with water vapour. The influent water is heated by the air causing its temperature to increase to 60° C when leaving packed bed 3. Heat transfer is mainly effected by condensation of water vapour from the air, into the water and the air temperature decreases until 31.5 C. The air remains saturated with water vapour, but as a result of the lower temperature, the water content is much less than at the moment of entering the bed 3.

In the packed bed 3 ammonia is not yet stripped from the water since the pH value of the water is much lower than 11. Also the water would otherwise again absorb this ammonia. The water which comes from the packed bed 3 is collected by tray 6 and it is supplied to a heating device 8 by a pump 7.

The stripping of ammonia from the water is possible when the pH of the water reaches a value of 11. This can be achieved by the injection of caustic soda via conduct 9, before or after the water passes a heating device 8, in which the water is heated to 62° C. Water sprayed over the packed bed 10 is contacting the air which has previously been carried through the packed bed 3 and a packed bed 11. In packed bed 11 the air is first heated from 31.5° C to 60° C by the water which is already stripped from ammonia in packed bed 10. The air absorbs steam in packed bed 11. In packed bed 10 the air then strips ammonia from the water.

In column 2 the beds 10 and 11 may in practice constitute one package. The total height of such a package is less than the sum of the individual heights as calculated theoretically, because heat exchange and stripping will both take place in both beds 10 and 11. The air enriched with ammonia leaves column 2 at 13 at a temperature of 60° C and is then transported by means of a fan 14 to the absorber portion 15 in which the ammonia reacts with sulfuric accid to form ammonia sulfate. The supply of water in which sulfuric acid is dissolved is indicated at 17 and pump 18 circulates the water over bed 15 and also carries away the excess liquid. Air at a temperature of 62.2° C leaves the absorber portion 15 and enters the packed bed 3 completing the cycle of the air flow. Both in the stripper portion and in the absorber portion reactions take place generating heat. In case the optimal air flow for heat transfer in the beds 3 and 11 is not equal to the optimal air flow through the stripper/absorber portion 10 and 15, a bypass 19 can be of use.

The packed beds 3 and 11 fulfil a similar function as a convential heat exchanger but they are considerably cheaper. At a water influent of 200,000 kg/h, preheated from 30° C to 60° C by means of a water flow, thereby cooling down from 62° C to 32° C, a heat exchanging surface would be needed of 2,000 m² and performed in stainless steel, this would cost about Dfl. 1,400,000. When using the process according to the invention the system for heat exchange would only require 5% thereof i.e.Dfl. 70,000'.

It will be clear for someone skilled in the art, that the supply of heat could also take place by means of direct injection of steam in the air flow. Also the process need not necessarily take place in one column. In the above the recirculating gas is air, but nevertheless another gas, such as hydrogen or helium could be used in view of their characteristic properties. Further it is observed that the process can be carried out under atmospheric pressure but also another system pressure will be possible within the scope of the invention.

It is possible that a portion of the ammonia is already stripped from the water in packed bed 3, which would adversely affect the efficiency of the process. By interpousing an extra absorber (not shown) between the packed beds 3 and 11 this can be prevented. Fouling of the equipment caused by waste water containing much carbon dioxide, can easily be prevented by carrying the air containing stripped carbon dioxide through a sieve plate upon which a liquid is provided reacting with carbon dioxide, making the removal of resulting carbonates easy. Moreover the adhesion of such carbonates to parts of the equipment can be prevented to a large extent by the fabricating parts of the equipment from, or lining such parts of the equipment with a material that repels such carbonates. "Teflon" is very suitable. Within the scope of the invention it is obvious that various embodiments are possible. Periodical maintenance could favor the installation of multiple absorbers/stripper sections and also it could be desirable to use two or more circulating gas circuits. It has been said before that it is not absolutely necessary to recirculate the carrying gas flow. These technological considerations are not further explained here because they are obvious for someone skilled in the art within the scope of the invention.

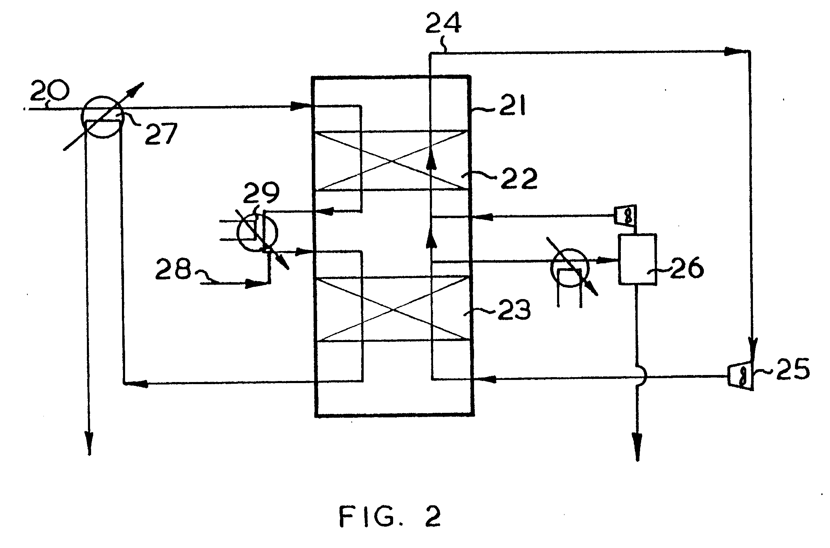

In Fig. 2 the advantages of the invention in obtaining a valuable aqueous ammonia solution are schematically illustrated. On the left side in Fig. 2 conduct 20 supplies waste water from which ammonia has to be stripped and/or from which a concentrated aqueous ammonia solution is to be produced with an acceptable efficiency.

As an example waste water is provided in a quantity of 20 m³/h containing 80 kg ammonia at the prevailing temperature and pressure. In the stripper/absorber column 21, the gas flow circulates through the packed beds 22 and 23 through conduct 24 and by means of a fan 25. The production of an aqueous ammonia solution takes place at 26 and amounts to 72 kg/h. This is done by cooling down and/or compressing a portion of the circulating gas flow, see the flow diagram. A conventional heat exchanger 27 raises the temperature of the waste water from 15° C to 50° C whereafter the temperature of the water is further increased to 60° C in packed bed 22.

The temperature of the water is still further increased to 70° C by heat transfer in heat exchanger 29 followed by the addition of lime or lye through conduct 28. Thereafter the packed bed 23 is passed by in counter-current with the gas flow. Finally the treated waste water passes heat exchanger 27, which it leaves at 25° C and then only 8 kg/h has been left from the original 80 kg/h of ammonia. Depending on the objective which is aimed at, requirements regarding draining of the stripped water or the value of the concentrate, the water leaving exchanger 27 can be used as such or it can still further be stripped. Anyway the major interest of the process can at the one hand be seen in the savings for a conventional exchanger and at the other hand in the commercial value of the concentrate to be obtained.

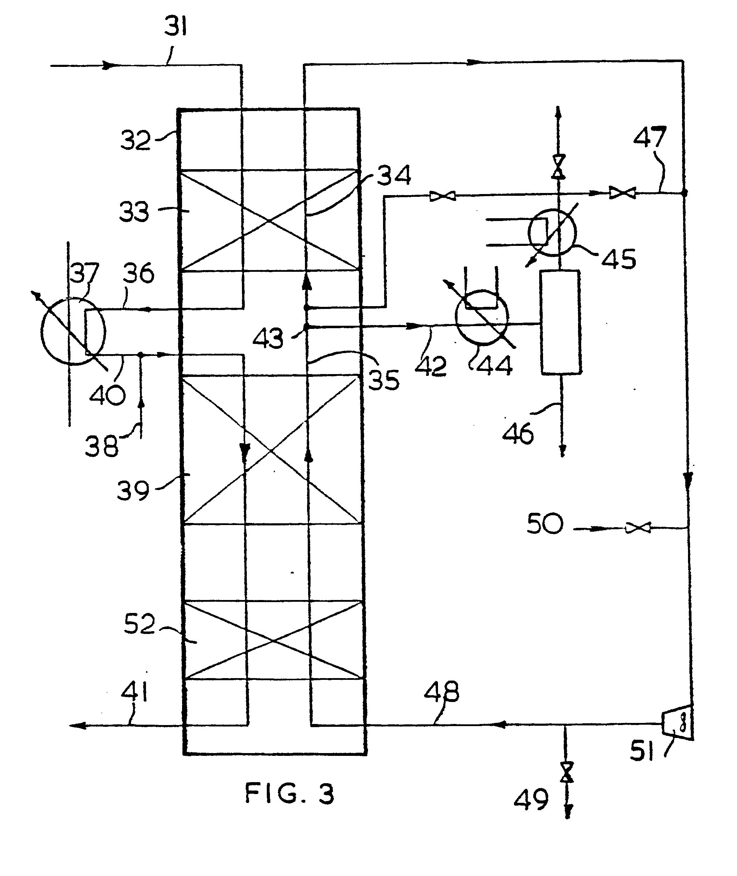

Fig. 3 shows schematically in a flow diagram another embodiment of the invention. Aqueous ammonia waste water 31 is supplied to column 32 and is brought in contact with a recirculating air flow 34 in counter current in packed bed 33. The pH-value of the water at 31 is still low so that most of the ammonia is present in the water as an ammonium ion. The gas flow, as it reaches packed bed 33 has a high concentration of ammonia, is saturated with water vapour and has a rather high temperature. In packed bed 33 the water absorbs ammonia from the gas flow which is assisted by the fact that at this low pH-value most of the ammonia is absorbed in the water as an ion, so that the vapour pressure of the ammonia, in equilibrium with the water, is lower than when ammonia would be dissolved as a gas.

The water leaves at 36 the packed bed 33 at a higher temperature and with a higher concentration of the ammonia than at the inlet at 31. The temperature increase of the water is mainly effected by condensation of water vapour and by the dissolving of ammonia from the gas flow. To obtain an operating power in the system the water temperature is still further increased in a heat exchanger 37 and thereafter at 38 lime or lye is added to the water in order to increase the pH-value in such a way as to allow an easy stripping of the ammonia. The water in packed bed 39 is brought in contact with the circulating air flow. Because of the fact that the water temperature at 40 is higher than at 36, the vapour pressure of the water and the partial pressure of the dissolved ammonia at 40 is higher than at 36. The pH-value being higher at 40 than at 36, the difference of the partial pressure of the ammonia is further augmented.

The gas flow at 35 has a concentration of ammonia and steam lying between the equilibrium values which belong to the water flows 36 and 40 respectively. The mass and heat transfer is in packed bed 33 directed from the gas to the water and in packed bed 39 it is directed from the water to the gas. The water is stripped from ammonia in packed bed 39, causing a decrease in temperature of the water. The stripped water leaves the column at 41 at a temperature which is higher than the temperature of the influent water. This increase in temperature is equal to the net added heat energy to the system, minus the heat energy which is required for stripping the originally available ammonia content from the water. The temperature of the gas which is saturated with steam at 48 is between the temperature of the influent water at 31 and the effluent water at 41.

If no ammonia is withdrawn from the system, the concentration of ammonia in the flows 36, 40 and 35 will continue to increase. Ammonia can be withdrawn from the system by diverting a portion of the aqueous ammonia water flow. Thus one obtains water with a higher content of ammonia than at 31 at the influent water. A still higher content of aqueous ammonia can be obtained by diverting a portion of the circulating gas flow at 42 and cooling it down in coolers 44 and 45, thereby condensating the steam. The major part of the ammonia from the gas flow 42 dissolves in the condensed water. This solution leaves the system at 46 and the cooled gas can again be added at 47 to the circulating gas, or between beds 39 and 33 to column 32 or it can be removed from the system.

The composition of the aqueous ammonia solution 46 can be varied by changing the quantity of the gas which is derived from the system at 42. The value of the pressure under which the liquids at 44 are condensed and the value of the pressure in column 32 need not be the same. By increasing the pressure at 44, one can reduce the quantity of stripped material, i.e. ammonia in the gas flow 47.

The packed beds 33 and 39 are serving as an absorber and stripper respectively, but also as a heater and heat recuperator respectively. In packed bed 33 heat is absorbed by the water from the circulating gas which has absorbed heat from the stripped water in packed bed 39. Thus it is possible a large heat supply to strip at a high temperature without which promotes the stripping of gas from a liquid.

Further it is also possible by withdrawing part of the circulating gas flow from the system, to prevent the building up of a high concentration of a gas stripped from the water. In case of the stripping of ammonia and carbon dioxide from water, air and carbon dyoxide can be withdrawn, as indicated at 49 but then air must be added to the system at 50.

A conventional fan is indicated at 51 whereas an extra absorber is shown at 52, e.g. to bind carbon dyoxide.

## Claims

1. A process for continuously removing and recovering ammonia from aqueous ammonia waste water wherein the water is led through a stripper column in counter-current with a stripping gas and wherein the water to be stripped of ammonia is preheated in a heat exchanger device characterized in that the water before being stripped of ammonia is brought in a first packed bed into direct contact with a warm gas stream which is saturated with steam and which transfers heat to the water in order to preheat the water;

   the pH of the water to be stripped is increased to a value suitable for stripping of the ammonia after the water has left the first packed bed;

   the water subsequently is stripped of ammonia; and

   the gas stream, before being led to the first packed bed at least partly is brought in direct contact in at least one further packed bed with the water while and/or after the water is being stripped of ammonia.

2. A process according to claim 1, characterized in that the water is further heated after it has passed the first packed bed and before it enters a second packed bed, in which it is stripped of ammonia.

3. A process according to claim 2, characterized in that the water after being stripped of ammonia is led through a third packed bed in which it is brought in direct contact with a gas stream which after leaving the third packed bed is led to the second packed bed.

4. A process according to claim 1, characterized in that the concentration of ammonia in said waste water is increased before the waste water is stripped of ammonia by bringing the waste water in direct contact in said first packed bed with at least part of the gas stream used for stripping the water of ammonia.

5. A process according to claim 4 characterized in that part of said gas stream after being used for stripping and before entering the first packed bed is diverted and cooled and/or compressed in order to obtain a concentrated aqueous ammonia solution.

6. A process according to any one of claims 1-5 characterized in that the gas stream at least partly is recirculated.

7. A process according to claim 1, characterized in that the gas stream after leaving the second packed bed is led through an absorber in which it is brought into contact with an acid which removes the ammonia and in that the gas leaving the absorber at least partly is again returned to said first packed bed.

**Revendications**

1. Procédé pour retirer et récupérer en continu de l'ammoniaque à partir d'eaux résiduaires ammoniaquales, dans lequel ces eaux sont dirigées à travers une colonne d'extraction à contre-courant d'un gaz d'extraction, et dans lequel les eaux destinées à être extraites de l'ammoniaque sont préchauffées dans un dispositif échangeur de chaleur, **caractérisé** :
   - en ce que avant d'être extraites de l'ammoniaque, les eaux sont amenées dans un premier lit fixe de remplissage en contact direct avec un courant de gaz chaud saturé en vapeur, qui transfert la chaleur à ces eaux, afin de les préchauffer ;
   - en ce que le pH des eaux à extraire est augmenté jusqu'à une valeur adaptée pour permettre leur extraction de l'ammoniaque, lorsque les eaux ont quitté le premier lit fixe de remplissage ;
   - en ce que l'eau est subséquemment extraite de l'ammoniaque et ;
   - en ce que le courant de gaz, avant d'être dirigé vers le premier lit fixe de remplissage est amené au moins en partie en contact direct avec l'eau pendant et/ou après que l'eau ait été extraite de l'ammoniaque.

2. Procédé selon la revendication 1, caractérisé en ce que l'eau est chauffée après avoir passé dans le premier lit fixe de relmplissage et avant qu'elle ne pénettre dans le second lit fixe de remplissage dans lequel elle est extraite de l'ammoniaque.

3. Procédé selon la revendication 2, caractérisé en ce que l'eau après avoir été retirée de l'ammoniaque est dirigée à travers un troisième lit fixe de remplissage dans lequel elle est amenée en contact direct avec un courant de gaz qui, après avoir quitté le troisième lit fixe de remplissage, est dirigé vers le second lit fixe de remplissage.

4. Procédé selon la revendication 1, caractérisé en ce que la concentration d'ammoniaque dans les eaux résiduaires est augmentée avant que celle-ci ne soit extraite de l'ammoniaque, en amenant en contact direct les eaux résiduaires dans ledit premier lit fixe de remplissage avec au moins une partie du courant de gaz utilisé pour extraire l'eau de l'ammoniaque.

5. Procédé selon la revendication 4, caractérisé en ce qu'une partie dudit courant gazeux, après avoir été utilisée pour extraire l'eau de l'ammoniaque, et avant de pénétrer dans le premier lit fixe de remplissage, est dévié et refroidi et/ou compressé, afin d'obtenir une solution aqueuse ammoniaquale concentrée.

6. Procédé selon l'une des revendications 1 à 5, caractérisé en ce que le courant de gaz est au moins partiellement recyclé.

7. Procédé selon la revendication 1, caractérisé :
   - en ce que le courant de gaz après avoir quitté le second lit fixe de remplissage, est dirigés à travers un absorbant dans lequel il est amené en contact avec un acide, qui élimine l'ammoniaque, et ;
   - en ce que le gaz, en quittant l'absorbant tout au moins partiellement, est recyclé vers le premier lit fixe de remplissage.

**Patentansprüche**

1. Verfahren zur kontinuierlichen Entfernung und Rückgewinnung von Ammoniak aus Ammoniak enthaltendem Abfallwasser, bei dem das Wasser im Gegenstrom mit einem Strippgas durch eine Stripp-Kolonne geleitet wird und bei dem das Wasser, aus dem Ammoniak gestrippt wird, in einem Wärmetauscher vorgeheizt wird, dadurch **gekennzeichnet**, daß das Wasser, bevor das Ammoniak aus ihm gestrippt wird, in einem ersten Füllkörperbett in direkten Kontakt mit einem warmen, dampfgesättigten Gasstrom gebracht wird, der Wärme auf das Wasser überträgt, um das Wasser vorzuheizen, daß der pH-Wert des zu strippenden Wassers, nachdem es das erste Füllkörperbett verlassen hat, auf einen Wert erhöht wird, der zum Strippen des Ammoniaks geeignet ist,
daß das Ammoniak anschließend aus dem Wasser gestrippt wird und
daß der Gasstrom, bevor er zum ersten Füllkörperbett geleitet wird, zumindest teilweise in mindestens einem weiteren Füllkörperbett in direkten Kontakt mit dem Wasser gebracht wird, während und/oder naohdem das Ammoniak aus dem Wasser gestrippt wird.

2. Verfahren nach Anspruch 1,
dadurch **gekennzeichnet**,
daß das Wasser, nachdem es das erste Füllkörperbett passiert hat, weiter erhitzt wird, bevor es zu einem zweiten Füllkörperbett geleitet wird, in dem das Ammoniak aus ihm gestrippt wird.

3. Verfahren nach Anspruch 2,
dadurch **gekennzeichnet**,
daß das Wasser, nachdem das Ammoniak aus ihm gestrippt worden ist, zu einem dritten Füllkörperbett geführt wird, in dem es in direkten Kontakt mit einem Gasstrom gebracht wird, der nach Verlassen des dritten Füllkörperbettes zum zweiten Füllkörperbett geführt wird.

4. Verfahren nach Anspruch 1,
dadurch **gekennzeichnet**,
daß die Ammoniakkonzentration im Abfallwasser erhöht wird, bevor das Ammoniak aus dem Abfallwasser gestrippt wird, indem das Abfallwasser im ersten Füllkörperbett mit mindestens einem Teil des zum Strippen von Ammoniak aus dem Wasser eingesetzten Gasstromes in direkten Kontakt gebracht wird.

5. Verfahren nach Anspruch 4,
dadurch **gekennzeichnet**,
daß der Teil des Gasstromes, nachdem er zum Strippen eingesetzt worden ist und bevor er zum ersten Füllkörperbett gelangt, umgelenkt und gekühlt und/oder komprimiert wird, um eine konzentrierte wässrige Ammoniaklösung zu erhalten.

6. Verfahren nach einem der Ansprüche 1 bis 5,
dadurch **gekennzeichnet**,
daß der Gasstrom zumindest teilweise rückgeführt wird.

7. Verfahren nach Anspruch 1,
dadurch **gekennzeichnet**,
daß der Gasstrom nach Verlassen des zweiten Füllkörperbettes durch einen Absorber geführt wird, in dem er mit einer Säure in direkten Kontakt gebracht wird, welche das Ammoniak entfernt, und daß das den Absorber verlassende Gas zumindest teilweise zum ersten Füllkörperbett erneut zurückgeführt wird.

FIG. 1

FIG. 2

EP 0 160 043 B1

FIG. 3